# EUROPEAN PATENT APPLICATION

(11) **EP 2 315 485 A1**
(43) Date of publication of application: **27.04.2011**
(21) Application number: 11151277.8
(22) Date of filing: 17.04.2006
(51) Int. Cl.: H04W 72/12, H04L 12/56

(54) **Event trigger for transmitting scheduling information in wireless communication networks**

(30) Priority: 10.06.2005 US 150557
(62) Divisional of application: 06750364.9
(71) Applicant: Motorola Mobility, Inc., Libertyville, IL 60048 (US)
(72) Inventor: Revel, Agnes, Southampton, Hampshire SO40 7QD (GB); Burbridge, Richard C, Hook, Hampshire RG27 9NP (GB); Fabien, Jean-Alcard, Lincolnshire, IL 60069 (US); Love, Robert T, Barrington, IL 60010 (US)
(74) Representative: McLeish, Nicholas Alistair Maxwell

(57) **Abstract**

A mobile wireless communication terminal and a method therein including a message generation entity communicably coupled to a transmitter of a wireless transceiver, the message generation entity generating a scheduling information message for transmission by the transmitter in response to a serving cell change notification message received by a receiver, wherein the scheduling information message is indicative of resources required to schedule a transmission by the mobile wireless communication terminal.

## Description

### FIELD OF THE DISCLOSURE

The present disclosure relates generally to wireless communication, and more particularly to sending scheduling information from a mobile terminal to a network entity, for example, from a user equipment to a Node B in a UMTS based wireless communication system, devices and methods.

### BACKGROUND OF THE DISCLOSURE

In 3GPP Release 6 High Speed Uplink Packet Access (HSUPA), increased data speeds are supported by an Enhanced Dedicated Channel (E-DCH). An enhanced Medium Access Control entity (MAC-es/MAC-e) has been added below the MAC-d layer in the user equipment (UE) to support E-DCH traffic.

In the 3GPP Medium Access Control (MAC) Protocol Specification TS 25.321 (Release 6), scheduling information is sent as part of the MAC-e protocol data unit (PDU) when the UE requests resources from a Node B. MAC-e protocol data units (PDUs) are transmitted by the UE to the Node B on an Enhanced Dedicated Physical Data Channel (E-DPDCH). The scheduling information informs the serving Node B of the resources required by the UE and the resource utilization of the UE. The scheduling information includes fields for the total E-DCH buffer status (TEBS) that identify the total amount of data available across all logical channels for which reporting has been requested by the radio resource control (RRC). The scheduling information identifies the highest priority logical channel with available data (HLID), and the highest priority logical channel with available data buffer status (HLBS). The scheduling information also includes UE power headroom (UPH) information indicating the ratio between the maximum allowed UE transmit power and the DPCCH power.

In 3GPP 25.309 v6.2.0, 9.3.1.1.2, it has been proposed for a UE to periodically send scheduling information to the serving E-DCH cell when the UE has data to send (on a logical channel for which scheduling information must be reported), and also send Scheduling Information in response to an unspecified event. The Serving EDCH cell is the cell responsible for sending scheduling commands to the UE.

The various aspects, features and advantages of the disclosure will become more fully apparent to those having ordinary skill in the art upon careful consideration of the following Detailed Description thereof with the accompanying drawings described below.

### BRIEF DESCRIPTION OF THE DRAWINGS

FIG. 1 is an exemplary wireless communication network.

FIG. 2 is a block diagram of a wireless communication terminal.

FIG. 3 is an exemplary process flow diagram.

FIG. 4 is a more particular exemplary process flow diagram,

### DETAILED DESCRIPTION

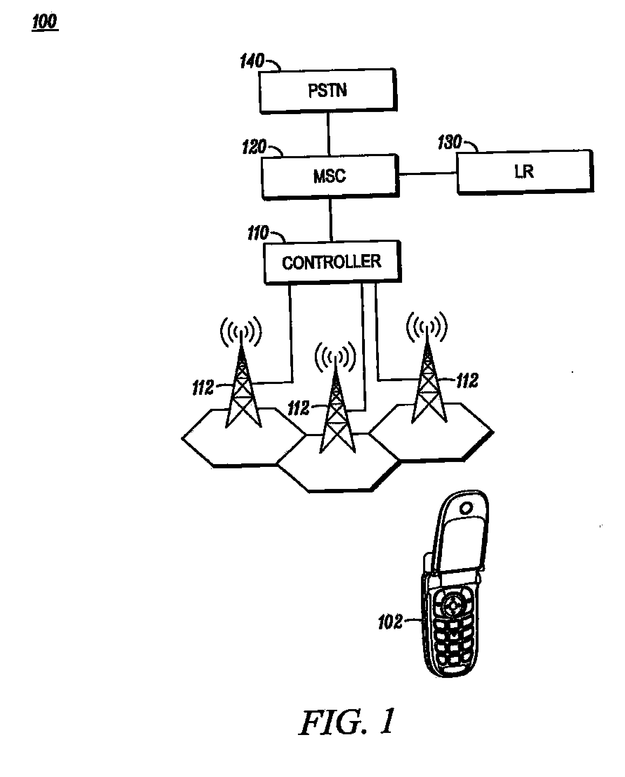

In FIG. 1, the exemplary wireless communication network 100 comprises generally a common access network including a controller 110 communicably coupled to one or more transceivers 112 that communicate with communication devices, for example, wireless mobile station (MS) 102, in corresponding cellular areas. In a Universal Mobile Telecommunications System (UMTS) 3G W-CDMA public land mobile network (PLMN), the access network is a radio network subsystem (RNS) comprising a radio-network controller (RNC) communicable coupled to a one or more Node Bs. In FTG. 1, the radio-network controller (RNC) corresponds to the controller 110 and the Node Bs correspond to the transceivers 112. In UMTS 3G networks, the mobile station (MS) is referred to as user equipment (UE). Alternatively, the exemplary PLMN may be implemented as some other existing or future generation wireless communication network.

In FIG. 1, the wireless communications system 100 also comprises generally a core network communicably coupled to the common access network. The exemplary core network includes a mobile switching center (MSC) 120 communicably coupled to a location register (LR) 130, for example, to a visitor location register (VLR) and/or a home location register (HLR). The exemplary core network may be a UMTS 3G or some other network. In FIG. 1, the exemplary mobile switching center 120 is communicably coupled to a public switched telephone network (PSTN) 140, for example, by a gateway mobile switching center not illustrated but known generally by those having ordinary skill in the art. The controller 110 may also be communicably coupled to other networks, for example, to a packet network.

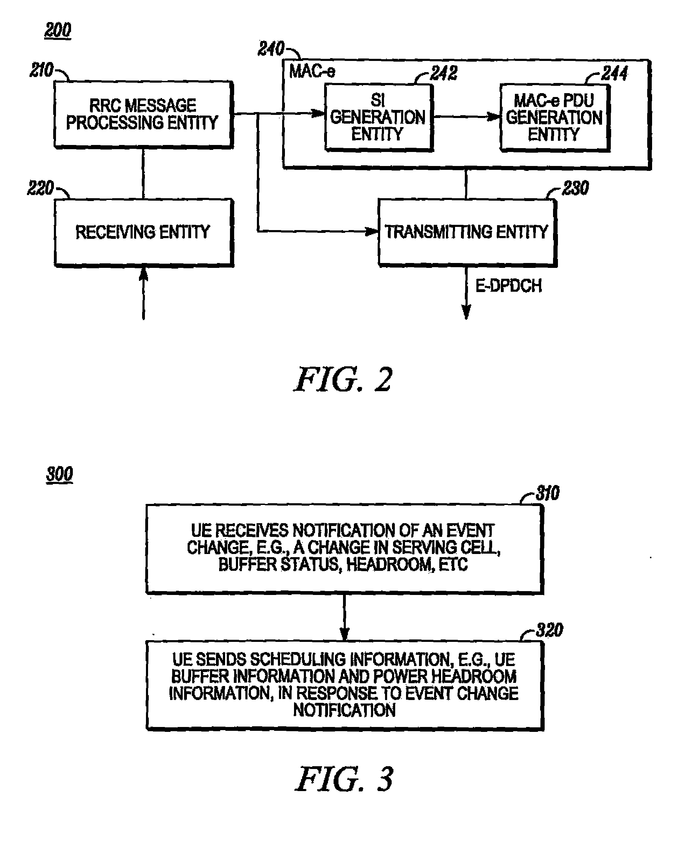

FIG. 2 is a partial schematic block diagram of an exemplary mobile station 200 comprising, among other entities well known by those having ordinary skill in the art, a control entity 210 in the form of an exemplary UMTS 3G user equipment (UE) radio resource control (RRC) processing entity for configuration and control. The control processing entity 210 is communicably coupled to a receiving entity 220 and to a transmitting entity 230. The control entity 210 is also communicably coupled to an extended medium access control (MAC-e) entity 240 including a scheduling information (SI) generation entity 242and a MAC-e PDU generation entity 244, which are discussed further below.

In the process diagram 300 of FIG. 3, at schematic block 310, a mobile communication terminal receives notification of an event change. In one embodiment, the exemplary 3G UE receives notification of a change in the cell serving the mobile wireless communication terminal. In 3G UMTS WCDMA networks, the notification of a change in the serving cell originates from the RNC. The notification of a change in the serving cell is sent on the downlink to the UE. An exemplary event change could be a change in the cell serving the mobile station. A change in serving cell includes changing in the sector within the same serving cell. Other exemplary event changes include a change in the UE's buffer status, a change in the UE's power headroom, and/or a change in high priority data waiting in the UE's buffer. In case of UE buffer status change, highest priority or power headroom change there is no notification sent by the RNC. If a change in the UE's power headroom, change in the highest priority logical channel or change in buffer status occurs, the UE sends scheduling information that can be received by the existing, or new serving cell if the serving cell changes. In FIG. 2, the event change notification is received by the mobile station 200 at the receiving entity 220 and communicated to the exemplary RRC message processing entity 210.

In 3G UMTS applications, the notification received by the UE is embodied as a radio resource control (RRC) message containing an enhanced dedicated channel (E-DCH) allocation. The E-DCH channel allocation comprises the ID of the new serving cell and also other configuration information. The Scheduling Information is sent after allocation of a new EDCH to provide the new serving cell all the information needed to schedule that UE.

In FIG. 3, at block 320, in response to the notification of the event change, for example the change in serving cell that causes the mobile station to listen to a new serving cell and follow the scheduling commands from that cell, the mobile station sends scheduling information to the new serving cell. The new serving cell is identified in the notification received at block 310. Thus, the scheduling information is sent to the new serving cell after reception of the notification of the change in the serving cell. Generally, the event change triggers the transmission of the scheduling information in formation by the mobile station. In one embodiment, the scheduling information includes buffer information and power headroom information of the wireless communication terminal.

In some embodiments, the scheduling information is transmitted to the new serving cell only when the mobile wireless communication terminal has buffered data for transmission on a channel for which scheduling information must be sent. In these embodiments, the transmission of the scheduling information is thus conditioned on the existence of buffered data for transmission. The buffered data for transmission is typically on a channel for which scheduling information must be sent.

In other embodiments, the mobile terminal periodically transmits the scheduling information for reception at the new serving cell when triggered by receiving the notification of the change in the cell serving the mobile wireless communication terminal.

In another embodiment, the mobile terminal includes a time stamp or other indicia with the scheduling information. The time stamp indicates the last opportunity for the mobile terminal to transmit or receive data. The network may use this information to schedule the terminal. For example, where multiple terminals are served simultaneously, the time stamp or other indicia provided by the terminal may be used by the network to schedule the terminals more equitably.

In 3G UMTS applications where the notification received by the UE is an enhanced dedicated channel (E-DCH) allocation, the scheduling information is transmitted to the new serving cell. In one 3G UMTS embodiment, the UE transmits scheduling information including transmitting a highest priority logical channel identification (HLID) with available data and the amount of data available in response to receiving the enhanced dedicated channel (E-DCH) allocation. In one embodiment, if multiple logical channels exist, for example, the logical channel corresponding to the highest priority will be reporting its buffer occupancy. The highest priority logical channel buffer status (HLBS) indicates the amount of data available on the highest priority logical channel (HLID) relative to a buffer size reported by total E-DCH buffer Status (TEBS).

In 3G UMTS applications, the scheduling information is transmitted in an enhanced medium access control (MAC-e) protocol data unit (PDU). In FIG. 2, the scheduling information is generated by the scheduling information generation entity (242), which communicates with the MAC-e PDU generation entity 244. The MAC-e PDU generation entity 244 generates the enhanced MAC PDU for transmission by the UE via the transmitting entity 230. In one embodiment, the presence of scheduling information is signaled in the enhanced medium access control protocol data unit (MAC-e PDU). In a more particular embodiment, the notification is signaled in a header of the medium access control protocol data unit using one or more bits.

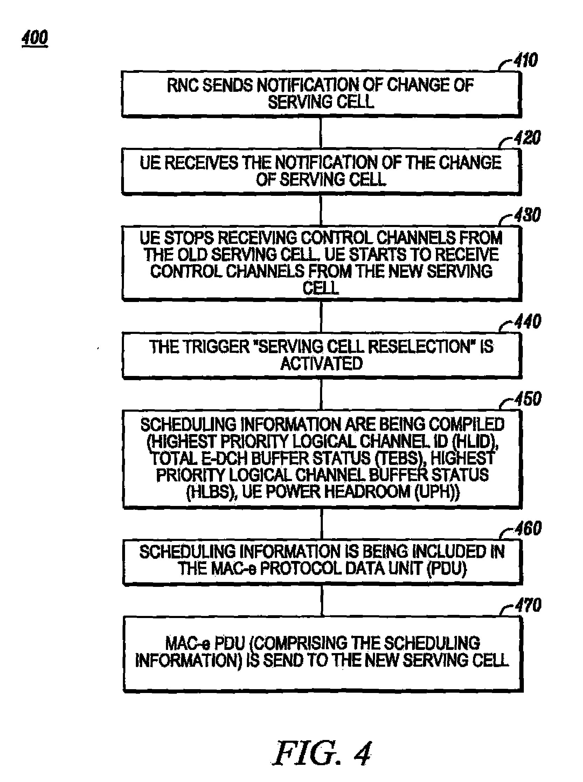

In the exemplary 3G UMTS process 400 of FIG. 4, at 410, the RNC sends notification of a serving cell change to the UE, which is received by the UE at 420. At 430, the UE stops receiving control channels from the old serving cell, and the UE begins receiving control channels from the new serving cell. At 440, the trigger "serving cell reselection" is activated. At 450, scheduling information, for example, highest priority logical channel ID (HLID), total E-DCH buffer status (TEBS), highest priority logical channel buffer status (HLBS), UE power headroom (UPH), are being compiled. At 460, the scheduling information is included in the MAC-e protocol data unit (PDU), and at 470, the MAC-e PDU having the scheduling information is sent by the UE to the new serving cell.

While the present disclosure and what is presently considered to be the best mode thereof have been described in a manner establishing possession by the inventors and enabling those of ordinary skill in the art to make and use the same, it will be understood and appreciated that there are many equivalents to the exemplary embodiments disclosed herein and that modifications and variations may be made thereto without departing from the scope and spirit of the inventions, which are to be limited not by the exemplary embodiments but by the appended claims. What is claimed is:
Other aspects of embodiments of the invention are defined in the following numbered clauses.
   1. A method in a mobile wireless communication terminal, the method comprising: receiving a notification of a change in a cell serving the mobile wireless communication terminal; transmitting scheduling information after receiving the notification of the change in the cell serving the mobile wireless communication terminal.
   2. The method of clause 1, transmitting scheduling information includes transmitting at least buffer information of the mobile wireless communication terminal and transmitting power headroom information of the mobile wireless communication terminal in response to receiving the notification of the change in the cell serving the mobile wireless communication terminal.
   3. The method of clause 1, transmitting scheduling information includes transmitting information indicative of the mobile wireless communication terminal's last opportunity for transmission or reception.
   4. The method of clause 1, periodically transmitting scheduling information in response to receiving the notification of the change in the cell serving the mobile wireless communication terminal.
   5. The method of clause 1, transmitting the scheduling information in a medium access control protocol data unit.
   6. The method of clause 1, signaling the presence of the scheduling information in a medium access control protocol data unit.
   7. The method of clause 1, transmitting scheduling information only when the mobile wireless communication terminal has buffered data for transmission.
   8. The method of clause 1, transmitting scheduling information in response to receiving the notification of the change in the cell serving the mobile wireless communication terminal.
   9. The method of clause 1, receiving notification of the change in a cell serving the mobile wireless communication terminal includes receiving a radio resource control message identifying the new serving cell.
   10. A method in a mobile wireless communication terminal capable of communicating in a wireless communication network including at least one serving cell, the method comprising: changing a configuration of the mobile wireless communication terminal; transmitting scheduling information in response to changing the configuration of the wireless communication terminal.
   11. The method of clause 10, changing the configuration includes changing the buffer status of the mobile wireless communication terminal, transmitting scheduling information includes transmitting buffer status information of the mobile wireless communication terminal.
   12. The method of clause 10, changing the configuration includes changing the power headroom of the mobile wireless communication terminal, transmitting scheduling information includes transmitting power headroom information of the mobile wireless communication terminal.
   13. The method of clause 10, changing the configuration includes changing a priority of data waiting in the buffer of the mobile wireless communication terminal, transmitting scheduling information includes transmitting data priority information of the mobile wireless communication terminal.
   14. The method of clause 10, transmitting the scheduling information in a medium access control protocol data unit.
   15. The method of clause 10, signaling the presence of the scheduling information in a header of the medium access control protocol data unit with at least one bit.
   16. The method of clause 10, receiving notification of a serving cell change, transmitting the scheduling information.
   17. The method of clause 16, periodically transmitting scheduling information.
   18. A wireless communication terminal, comprising: a wireless transceiver including a receiver and a transmitter; a control entity communicable coupled to the receiver of the wireless transceiver; a message generation entity communicably coupled to the transmitter of the wireless transceiver, the message generation entity generating a scheduling information message for transmission by the transmitter, the scheduling information message generated in response to a serving cell change notification message received by the receiver.
   19. The terminal of clause 18, the scheduling information message including buffer information and transmitting power headroom information of the wireless communication terminal.
   20. The terminal of clause 18, the message generating entity is a medium access control entity, the scheduling information message is contained in a medium access control protocol data unit.
   21. The terminal of clause 20, the medium access control protocol data unit includes at least one bit signaling the presence of the scheduling information in medium access control protocol data unit.
   22. The terminal of clause 21, the medium access control entity including a scheduling information generation entity and a medium access control protocol data unit generation entity, the scheduling information generation entity compiling scheduling information, and the medium access control protocol data unit generation entity generating the medium access protocol data unit including the scheduling information compiled by the scheduling information generation entity.

## Claims

1. A method in a mobile wireless communication terminal, the method comprising:
receiving a notification, at the mobile wireless communication terminal, of a change in a cell serving the mobile wireless communication terminal;
transmitting, from the mobile wireless communication terminal, scheduling information in response to receiving the notification of the change in the cell serving the mobile wireless communication terminal,
the scheduling information indicative of resources required to schedule the mobile wireless communication terminal.

2. The method of Claim 1, transmitting scheduling information includes transmitting buffer information of the mobile wireless communication terminal in response to receiving the notification of the change in the cell serving the mobile wireless communication terminal.

3. The method of Claim 1, transmitting scheduling information includes transmitting information indicative of the mobile wireless communication terminal's last opportunity for transmission or reception.

4. The method of Claim 1, periodically transmitting scheduling information in response to receiving the notification of the change in the cell serving the mobile wireless communication terminal.

5. The method of Claim 1, transmitting the scheduling information in a medium access control protocol data unit.

6. The method of Claim 1, signaling the presence of the scheduling information in a medium access control protocol data unit.

7. The method of Claim 1, transmitting scheduling information only when the mobile wireless communication terminal has buffered data for transmission, the scheduling information indicative of buffer status at the mobile wireless communication terminal.

8. The method of Claim 1, receiving notification of the change in a cell serving the mobile wireless communication terminal includes receiving a radio resource control message identifying the new serving cell.

9. The method of Claim 1, transmitting scheduling information includes transmitting power headroom information of the mobile wireless communication terminal in response to receiving the notification of the change in the cell serving the mobile wireless communication terminal.

10. The method of Claim 1, transmitting scheduling information includes transmitting information indicative of resources required to schedule a transmission by the mobile wireless communication terminal.

11. A wireless communication terminal comprising:
a wireless transceiver including a receiver and a transmitter;
a message generation entity communicably coupled to the transmitter of the wireless transceiver,
the message generation entity generating a scheduling information message for transmission by the transmitter, the scheduling information message generated in response to a serving cell change notification message received by the receiver,
the scheduling information message indicative of resources required to schedule the mobile wireless communication terminal.

12. The terminal of Claim 11, the scheduling information message including buffer information of the mobile wireless communication terminal.

13. The terminal of Claim 11, the message generating entity is a medium access control entity, and the scheduling information message is contained in a medium access control protocol data unit.

14. The terminal of Claim 13, the medium access control protocol data unit includes at least one bit signaling the presence of the scheduling information in medium access control protocol data unit.

15. The terminal of Claim 14,
the medium access control entity including a scheduling information generation entity and a medium access control protocol data unit generation entity,
the scheduling information generation entity compiling scheduling information, and the medium access control protocol data unit generation entity generating the medium access protocol data unit including the scheduling information compiled by the scheduling information generation entity.

16. The method of Claim 11, the scheduling information indicative of resources required to schedule a transmission by the wireless communication terminal.
